# EUROPÄISCHE PATENTANMELDUNG

(11) **EP 3 495 845 A1**
(43) Veröffentlichungstag der Anmeldung: **12.06.2019**
(21) Anmeldenummer: 18208195.0
(22) Anmeldetag: 26.11.2018
(51) Int. Cl.: G01S 17/42, G01S 7/481

(54) **OPTOELEKTRONISCHER SENSOR UND VERFAHREN ZUR ERFASSUNG EINES ÜBERWACHUNGSBEREICHS**

(30) Priorität: 07.12.2017 DE 102017129100
(71) Anmelder: Sick AG, 79183 Waldkirch (DE)
(72) Erfinder: Gimpel, Dr. Hartmut, 79194 Gundelfingen (DE); Hug, Gottfried, 79183 Waldkirch (DE)

(57) **Zusammenfassung**

Es wird ein optoelektronischer Sensor (10) zur Erfassung eines Überwachungsbereichs (20) angegeben, der mindestens einen Lichtsender (22) zum Aussenden mehrerer voneinander separierter ausgesandter Lichtstrahlen (26), einen gemeinsamen Lichtempfänger (34) zum Erzeugen eines Empfangssignals aus an Objekten in dem Überwachungsbereich (20) remittierten Lichtstrahlen (28) und eine Auswertungseinheit (42) aufweist, die dafür ausgebildet ist, aus dem Empfangssignal Informationen über die Objekte an dem jeweiligen Auftreffort eines ausgesandten Lichtstrahls (26) zu gewinnen. Dabei ist dem Lichtempfänger (34) ein optisches Konzentratorelement (32) vorgeordnet, welches mehrere voneinander separierte Lichteintrittsflächen (54) für jeweils einen remittierten Lichtstrahl (28) sowie eine gemeinsame Lichtaustrittsfläche (56, 56a) aufweist.

## Beschreibung

Die Erfindung betrifft einen optoelektronischen Sensor und ein Verfahren zur Erfassung eines Überwachungsbereichs nach dem Oberbegriff von Anspruch 1 beziehungsweise 15.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Ein mögliches Ergebnis der Auswertung ist eine binäre Objektfeststellung. Oft wird die Lichtlaufzeit mit einem bekannten Phasen- oder Pulsverfahren gemessen, um den Abstand eines angetasteten Objekts zu bestimmen.

Um den Messbereich zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen, wie dies beispielsweise in DE 197 57 849 B4 beschrieben ist.

Eine andere Möglichkeit zur Messbereichserweiterung besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich.

Üblicherweise ist in einem derartigen mehrstrahligen System für jeden Messstrahl ein eigener Lichtsender und Lichtempfänger vorgesehen. Das bedeutet eine Vervielfältigung der am Sende- und Empfangspfad beteiligten Komponenten, also der Optik, der Sende- und Empfangselemente selbst und der zugehörigen Elektronik, und damit hohe Kosten. Für den Sendepfad gibt es Vorschläge, etwa in der DE 10 2015 121 839 A1, mehrere Sendelichtstrahlen durch eine gemeinsame Optik zu führen oder sie sogar dadurch aus einem gemeinsamen Sendeelement zu erzeugen.

Entsprechende Versuche, auch ein Mehrstrahl-Empfangsmodul mit nur einem einzigen Empfangselement zu konstruieren, stoßen auf Schwierigkeiten und ziehen erhebliche Nachteile mit sich. Konkret stellt sich hier die Frage einer geeigneten Empfangsoptik. Eine erste Möglichkeit ist, jedem zu empfangenden Lichtstrahl eine eigene Empfangslinse zuzuordnen, die dessen Licht auf den gemeinsamen Lichtempfänger fokussiert. Abgesehen von dem offensichtlichen Nachteil einer mehrteiligen Empfangsoptik haben die jeweiligen Empfangslinsen für sich genommen jeweils eine deutlich reduzierte Empfangsapertur, und dementsprechend verringert sich der Empfangspegel und damit die Reichweite des Sensors. Mehrere Empfangslinsen mit einer Einstrahlsystemen vergleichbaren Empfangsapertur verbieten sich wegen der dann erforderlichen Baugröße.

Eine alternativ eingesetzte gemeinsame Empfangslinse zeigt diese Nachteile zwar nicht. Um aber tatsächlich alle Lichtstrahlen auf den gemeinsamen Lichtempfänger zu fokussieren, muss eine sehr kleine Brennweite gewählt werden, damit die Bildgröße sehr klein wird. Die Brennweite wird in einem üblichen Optikdesign für einen gattungsgemäßen Sensor ohnehin schon minimal so kurz gewählt, wie es die Begrenzung durch die gewünschte Öffnungszahl zulässt. Eine noch kürzere Brennweite würde nicht mehr erlauben, alles Licht aus der notwendigen großen Empfangsapertur bei den steilen Konvergenzwinkeln zwischen Empfangslinse und Lichtempfänger zu verarbeiten. Daher wäre auch hier die Konsequenz eine kleinere Empfangsapertur und damit reduzierte Reichweite des Sensors. Grundsätzlich könnten die Anforderungen an die Empfangslinse durch Wahl eines sehr großen Lichtempfängers entspannt werden, doch dagegen sprechen die Kosten und das ungünstige Hochfrequenzverhalten eines solchen Lichtempfängers.

Prinzipiell sind anstelle von Linsen andere optische Elemente bekannt, um die zu empfangenden Lichtstrahlen durch Umlenken auf dem gemeinsamen Lichtempfänger zu vereinigen. Beispiele sind optische Trichter oder parabolische Konzentratoren (CPC, Compound Parabolic Concentrator) mit diversen runden oder rechteckigen Querschnittsformen. Ein gravierender Nachteil hierbei ist die geringe Effizienz, denn es wird ein großer Lichtanteil wieder aus der Eintrittsöffnung heraus reflektiert. Weiterhin ist die notwendige Eintrittsfläche relativ groß, da sie nicht nur die Querschnitte der Lichtstrahlen, sondern auch die freien Zwischenräume abdeckt. Wegen der Etendue-Erhaltung ist es unmöglich, dies verlustfrei auf die kleinere Fläche des Lichtempfängers zu übertragen.

Die EP 2 910 969 B1 offenbart einen optoelektronischen Sensor, der in seinem Empfangspfad eine Empfangslinse und ein optisches Trichterelement mit einer Blende an dessen Eintrittsfläche aufweist. Damit soll ein relativ großflächiger SPAD-Detektor beleuchtet, dabei das Empfangslicht durchmischt und zugleich Fremdlicht ausgeblendet werden. Es geht dabei um ein einstrahliges System, und die Blende würde weitere Messstrahlen aus anderen Winkelrichtungen wie Fremdlicht unterdrücken. Außerdem sorgt die Blende dafür, dass das Trichterelement keineswegs als Konzentrator wirkt, denn die Eintrittsfläche ist effektiv sogar erheblich kleiner als die Austrittsfläche. Ließe man rein hypothetisch die Blende weg, so würde der wesentliche von der EP 2 910 969 B1 angestrebte Zweck verfehlt. Außerdem bliebe immer noch das oben erläuterte Problem eines optischen Trichters der geringen Effizienz durch aus der Eintrittsöffnung herausreflektierte Lichtanteile gänzlich ungelöst.

In der DE 10 2014 118 056 A1 wird eine optoelektronische Detektionseinrichtung für ein Kraftfahrzeug beschrieben. Ein Bündel von Lichtwellenleitern erfasst jeweils Licht aus einem nach vorne gerichteten Streifen und leitet dieses zur Abstandsmessung nach innen auf einen zugeordneten Detektor eines zeilenförmigen Empfängers. An den Eintrittsstellen der Lichtwellenleiter ist eine jeweilige Empfangsoptik vorgesehen. Somit handelt es sich zwar um ein mehrstrahliges System, jedoch mit der eingangs schon erläuterten ungünstigen Vervielfachung aller Komponenten in den mehreren Empfangskanälen.

Aus der DE 102 00 366 A1 ist ein Mehrkanalempfängersystem für winkelaufgelöste Laserentfernungsmessung bekannt. Dabei wird das Licht mit einem Bündel dicht benachbarter Lichtwellenleiter empfangen, die jeweils eine individuelle Länge und ein vorgewähltes Verteilungsverhältnis aufweisen und die das Empfangslicht auf einen gemeinsamen Lichtempfänger leiten. Durch die individuellen Lichtwellenleitereigenschaften entsteht eine jeweilige zeitliche Verzögerung und relative Amplitude, die es ermöglicht zu erkennen, welcher Lichtwellenleiter zu einem Empfangssignal beigetragen hat, und so letztlich trotz nur eines Empfangselements die Ortsinformation am Eingang des Bündels von Lichtwellenleitern zu rekonstruieren. Ein dichtes Bündel von Lichtwellenleitern wäre jedoch völlig ungeeignet, mit Zwischenabstand voneinander separierte Messstrahlen wie bei einem Mehrstrahlsystem der eingangs geschilderten Art zu empfangen. Außerdem würde dabei ein Kernaspekt der DE 102 00 366 A1, nämlich die individuellen Lichtwellenleitereigenschaften, jeweils unterschiedliche Einflüsse auf die einzelnen Messstrahlen nehmen und dadurch nur stören.

Es ist daher Aufgabe der Erfindung, ein gattungsgemäßes Mehrstrahlsystem weiter zu verbessern.

Diese Aufgabe wird durch einen optoelektronischen Sensor und ein Verfahren zur Erfassung eines Überwachungsbereichs nach Anspruch 1 beziehungsweise 15 gelöst. Der erfindungsgemäße Sensor kann als ein Mehrfachtaster aufgefasst werden, der mit mindestens einem Lichtsender mehrere Sendelichtstrahlen aussendet. Es sind also mehrere Lichtsender vorhanden, oder das Licht eines Lichtsenders wird in mehrere Sendelichtstrahlen aufgespalten, oder es ist eine Mischung aus beidem vorgesehen. Die Sendelichtstrahlen sind nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen. Es entsteht ein Bündel aus Überwachungsstrahlen und im Falle einer Scanbewegung eine Schar von Überwachungsebenen.

Empfangsseitig ist erfindungsgemäß nur ein gemeinsamer Lichtempfänger für die mehreren remittierten Lichtstrahlen oder Messstrahlen vorgesehen, und zwar in dem Sinne, dass anders als beispielsweise bei einem pixelaufgelösten Lichtempfänger nur ein gemeinsames Empfangssignal erzeugt wird. Allerdings handelt es sich nur vorzugsweise um einen Lichtempfänger mit nur einem einzigen Pixel, wie eine PIN-Diode oder eine APD. Es bleibt möglich, dass die Signale mehrerer Lichtempfangselemente zusammengeführt werden. Dies ist insbesondere im Falle von SPADs (Single-Photon Avalanche Diode) sinnvoll, wo ein einzelnes Lichtempfangselement zu empfindlich gegenüber Störereignissen wäre und deshalb für eine robustere Statistik mehrere SPADs zum gemeinsamen Empfangssignal beitragen. Es sei angemerkt, dass das Konzentratorelement und der Lichtempfänger zwar vorzugsweise, nicht aber notwendig für sämtliche Messstrahlen des Sensors zuständig sind. Mischformen mit zusätzlichen Sende- und/oder Empfangsmodulen für einzelne oder Gruppen von weiteren Messstrahlen bleiben denkbar.

Die Erfindung geht nun von dem Grundgedanken aus, dem Lichtempfänger ein nichtabbildendes optisches Konzentratorelement vorzuordnen. Es weist auf der einen, dem Überwachungsbereich zugewandten Seite mehrere separierte Lichteintrittsflächen auf, die jeweils einem der zu empfangenden remittierten Lichtstrahlen zugeordnet sind. Dabei bedeutet separiert in Entsprechung zu den bereits erläuterten voneinander separierten ausgesandten Lichtstrahlen, dass es zwischen den Lichteintrittsflächen freie Bereiche gibt. Auf der anderen, dem Lichtempfänger zugewandten Seite weist das Konzentratorelement eine gemeinsame Lichtaustrittsfläche auf. Somit fängt das Konzentratorelement an den Lichteintrittsflächen die remittierten Lichtstrahlen auf und lenkt sie gebündelt auf den Lichtempfänger.

Die Erfindung hat den Vorteil, dass der Sensor in seinem Empfangspfad mit nur einem Lichtempfänger und in vielen Ausführungsformen auch mit nur einer Empfangsoptik auskommt. Dadurch entfällt zugleich eine individuelle Empfangselektronik. Der Sensor wird dadurch erheblich vereinfacht und entsprechend kostengünstiger. Im Gegensatz zu starren herkömmlichen Konzepten mit mehreren Messstrahlen muss die Empfangsleiterplatte nicht verändert werden, um Sensoren mit veränderter Anordnung der Messstrahlen und der Winkel dazwischen zu schaffen. Es genügt, das optische Konzentratorelement anzupassen. Die eingangs diskutierten Nachteile herkömmlicher Ansätze zum Empfang mehrerer remittierter Lichtstrahlen in einem gemeinsamen Lichtempfänger hat das erfindungsgemäße Konzentratorelement nicht, so dass keine Abstriche hinsichtlich Empfindlichkeit und Reichweite hingenommen werden müssen. Vorzugsweise ist dem Konzentratorelement eine gemeinsame Empfangsoptik vorgeordnet, wobei insbesondere in deren Brennebene die Lichteintrittsflächen angeordnet sind. Die gemeinsame Empfangsoptik kann sehr einfach als nur eine gemeinsame Empfangslinse gestaltet sein. Sie sorgt dafür, dass die remittierten Lichtstrahlen einen gebündelten Lichtfleck erzeugen, so dass tatsächlich nach Möglichkeit sämtliches Licht eines remittierten Lichtstrahls eingesammelt wird. Eine alternative Ausführungsform mit einzelnen Empfangsoptiken vor einer Lichteintrittsfläche oder einer Gruppe von Lichteintrittsflächen ist denkbar. Das ermöglicht beispielsweise, die Lichteintrittsflächen nicht in einer Ebene, sondern auf einer gekrümmten Linie oder Fläche anzuordnen und so einen zusätzlichen optischen Designfreiheitsgrad zu schaffen, welcher unter Umständen den höheren Aufwand und die kleinere Empfangsapertur mehrerer Empfangslinsen aufwiegt.

Das Konzentratorelement weist bevorzugt mehrere Lichtleiter, insbesondere jeweils einen Lichtleiter je remittiertem Lichtstrahl, zwischen einer jeweiligen Lichteintrittsfläche und der Lichtaustrittsfläche auf. Die Umlenkung durch Lichtleiter überwindet die anfängliche Separation der remittierten Lichtstrahlen beziehungsweise der Lichteintrittsflächen zumindest teilweise, vorzugsweise vollständig. Die remittierten Lichtstrahlen rücken dichter zusammen.

Mindestens ein Lichtleiter weist bevorzugt einen sich in Richtung von der Lichteintrittsfläche zu der Lichtaustrittsfläche verjüngenden Querschnitt auf. Derartige sich verjüngende oder getaperte Lichtleiter sorgen dafür, dass der Querschnitt des jeweiligen remittierten Lichtstrahls verkleinert wird. Der ausgangsseitige Empfangslichtfleck ist also kleiner als der eingangsseitige Empfangslichtfleck und so leichter von dem gemeinsamen Lichtempfänger erfassbar. Wie auch bei nachfolgend erläuterten Eigenschaften der Lichtleiter betrifft dies mindestens einen, vorzugsweise mehrere oder alle Lichtleiter, wobei im letzteren Fall wiederum einzelne Ausnahmen denkbar sind.

Mindestens eine Lichteintrittsfläche ist bevorzugt gegenüber der Senkrechten zu dem dort einfallenden remittierten Lichtstrahl verkippt. Das vereinfacht unter Umständen das Design des Konzentratorelements und insbesondere von Lichtleitern, da nur die Lichteintrittsfläche angepasst werden muss. Bei passendem Eintrittswinkel des remittierten Lichtstrahls durch entsprechende Neigung der Lichteintrittsfläche koppelt der remittierte Lichtstrahl möglichst ideal ein und wird in einer Weise gebrochen, dass er anschließend einen gewünschten Weg durch das Konzentratorelement nimmt.

Mindestens ein Lichtleiter ist bevorzugt in einem Eintrittsbereich an der Lichteintrittsfläche entsprechend dem Lichtweg des dort einfallenden remittierten Lichtstrahls orientiert. Dann kann der remittierte Lichtstrahl senkrecht einfallen und setzt im Eintrittsbereich seinen Lichtweg unmittelbar fort. Auch so ist eine optimale Einkopplung möglich.

Mindestens einige Lichtleiter sind bevorzugt in einem Austrittsbereich an der Lichtaustrittsfläche parallel zueinander angeordnet. Dadurch lassen sie sich besonders dicht packen, weil keine Krümmungen gegenseitige Abstände erzwingen. Außerdem entspricht die parallele Ausrichtung typischerweise einer zu der Fläche des Lichtempfängers senkrechten gemeinsamen Ausbreitungsrichtung.

Mindestens ein Lichtleiter ist bevorzugt gebogen. Diese Biegung sorgt für die Anpassung zwischen der jeweiligen Lichteintrittsfläche und der Lichtaustrittsfläche und ermöglicht, dort jeweils eine passende Orientierung anzunehmen, wie beispielsweise eingangsseitig entsprechend dem einfallenden remittierten Lichtstrahl und ausgangsseitig senkrecht zum Lichtempfänger. Ein gebogener Lichtleiter weist insbesondere in einem mit der Lichteintrittsfläche beginnenden ersten Bereich eine konstante Krümmung zur Mitte des Konzentratorelements hin und in einem mit der Lichtaustrittsfläche endenden zweiten Bereich eine konstante Krümmung von der Mitte weg auf. Vorzugsweise ist diese positive beziehungsweise negative Krümmung gerade hälftig auf dem Lichtleiter verteilt, d.h. mit einem Wendepunkt in der Mitte des Lichtleiters, und weist jeweils den gleichen Betrag auf. So wird der verfügbare Abstand längs der optischen Achse optimal ausgenutzt, um mit möglichst kleinem Maximalwert der Krümmung den Seitenversatz zum Zentrum zu überwinden. Stellen großer Krümmung würden die Winkelverteilung innerhalb des remittierten Lichtstrahls ungünstig beeinflussen.

Mindestens ein Lichtleiter weist im Inneren einen höheren Brechungsindex auf. Ein Beispiel dafür ist ein Querschnittsaufbau mit einem Kernmaterial eines hohen Brechungsindex' und einem Mantel mit geringerem Brechungsindex. Es sind auch mehr als diese zwei Brechungsindexstufen beziehungsweise ein kontinuierlich nach innen hin zunehmender Brechungsindex denkbar. Solche Lichtleiter sind etwas aufwändiger in der Herstellung, dafür jedoch robuster gegen Beschädigungen der Außenhaut.

Die Lichteintrittsflächen weisen bevorzugt untereinander einen Abstand auf, der mindestens einem Viertel, einer Hälfte oder einem ganzen Durchmesser einer Lichteintrittsfläche entspricht. Die Abstände der Lichteintrittsflächen entsprechen der Separierung der Lichtstrahlen. Bei einer derart ausgeprägten Separierung, wo insbesondere die Lichtstrahlen weiter voneinander entfernt sind, als sie selbst groß sind, ist es besonders schwierig, mit einem einzigen Empfangselement auszukommen, und daher das erfindungsgemäße Konzentratorelement besonders vorteilhaft. Die Lichteintrittsflächen sind untereinander vorzugsweise gleich groß, was untereinander gleichwertigen Lichtstrahlen mit zumindest annähernd gleichem Querschnitt entspricht.

Das Konzentratorelement weist bevorzugt einen nicht-abbildenden zweiten Konzentratorabschnitt auf, der einen sich an die Lichtleiter anschließenden Eintrittsbereich und die Lichtaustrittsfläche aufweist und sich von dem Eintrittsbereich zu der Lichtaustrittsfläche verjüngt. Der zweite Konzentratorabschnitt ergänzt den ersten Konzentratorabschnitt, nämlich die Lichtleiter. Er nimmt den Zwischenlichtfleck am Ende der Lichtleiter auf und verkleinert ihn aufgrund seiner verjüngenden Geometrie zur Austrittsfläche hin. Zugleich können beispielsweise durch mehrfache innere Totalreflexion die Lichtstrahlen durchmischt werden, so dass unabhängig von der Position des einfallenden remittierten Lichtstrahls möglichst der gesamte Lichtempfänger gleichmäßig ausgeleuchtet wird. Für diesen zweiten Konzentratorabschnitt kommen ein Trichter oder ein parabolischer Konzentrator in Betracht. Die einleitend erläuterten Lichtverluste treten wegen des kontrollierten Lichteinfalls aus den Lichtleitern nicht mehr auf oder bleiben zumindest sehr gering.

Das Konzentratorelement ist bevorzugt dafür ausgebildet, die Empfangslichtflecken der remittierten Lichtstrahlen auf dem Lichtempfänger übereinander anzuordnen. Die anfangs separierten remittierten Lichtstrahlen sollen einander also auf dem gemeinsamen Lichtempfänger mindestens teilweise oder sogar vollständig überlappen. Für eine herkömmliche Verarbeitung mehrerer Empfangskanäle in jeweils eigenen Lichtempfängern oder eigenen Pixelbereichen wäre ein solcher Überlapp unbrauchbar, erfindungsgemäß genügt so eine kleine Fläche für den gemeinsamen Empfang. Das Vermischen oder Übereinanderlegen von Empfangslichtflecken geschieht vorzugsweise im zweiten Konzentratorabschnitt, nachdem zuvor die Lichtleiter die Separation der Lichteintrittsflächen überwunden haben.

Der Flächeninhalt der lichtempfindlichen Fläche des Lichtempfängers ist vorzugsweise kleiner als die Summe der Flächeninhalte der Lichteintrittsflächen. Das bedeutet, dass über das Zusammenrücken der Lichtstrahlen oder das Eliminieren von Zwischenbereichen der Separation der Lichtstrahlen hinaus ein zusätzlicher Konzentrationseffekt erzielt wird, der auch die von den remittierten Lichtstrahlen durchsetzte Fläche zum Lichtempfänger hin verringert. Statt der lichtempfindlichen Fläche des Lichtempfängers könnte auch die Austrittsfläche als Bezug genommen werden, aber bei einem endlichen Abstand zwischen optischem Konzentratorelement und Lichtempfänger kann sich je nach Divergenz oder Konvergenz des aus dem Konzentratorelement austretenden Lichts ein Unterschied ergeben.

Der Flächeninhalt einer Lichteintrittsfläche ist vorzugsweise kleiner als derjenige der lichtempfindlichen Fläche des Lichtempfängers. Das bezieht sich nun nicht mehr auf die summarische Betrachtung aller Lichteintrittsfläche, sondern eine einzelne Lichteintrittsfläche. Das Ergebnis ist eine Blendenwirkung. Dies hilft besonders bei großflächigem Lichtempfänger, etwa einem SPAD-Detektor aus mehreren SPAD-Empfangselementen, die ein gemeinsames Empfangssignal liefern. Die Blendenwirkung beschränkt den jeweiligen Empfangswinkel für einen remittierten Lichtstrahl auf ein notwendiges Minimum und sorgt so für geringere Fremdlichtempfindlichkeit.

Die Auswertungseinheit ist bevorzugt dafür ausgebildet, mehrere Lichtsender zum Aussenden der mehreren voneinander separiert ausgesandten Lichtstrahlen in einem Multiplexverfahren nacheinander zu aktivieren. Das Zeitmultiplexing ermöglicht, die einzelnen remittierten Lichtstrahlen in der Auswertungseinheit zu unterscheiden. Der herkömmlich übliche Bezug durch ein jeweils eigenes Empfangselement oder zumindest einen eigenen Pixelbereich ist wegen des gemeinsamen Lichtempfängers nicht möglich und wird so ersetzt. Alternativ ist denkbar, die ausgesandten Lichtstrahlen zu codieren, etwa mit einer Pulsfolge, und die Identität der jeweils das Empfangssignal erzeugenden remittierten Lichtstrahlen in der Auswertungseinheit anhand der Codierung zu rekonstruieren.

Die Auswertungseinheit ist bevorzugt dafür ausgebildet, aus einer Lichtlaufzeit zwischen Aussenden der ausgesandten Lichtstrahlen und Empfangen der remittierten Lichtstrahlen einen Abstand des Objekts zu bestimmen. Der Sensor wird dadurch entfernungsmessend. Durch die mehreren Lichtstrahlen wird der Abstand an mehreren Abtastpunkten bestimmt, wobei eine einzelne Auswertung je Abtastpunkt, aber auch Mittelungen oder andere gemeinsame Auswertungen denkbar sind. Alternativ zu einer Entfernungsmessung wird lediglich die Anwesenheit eines Objekts festgestellt und beispielsweise als Schaltsignal ausgegeben.

Der Sensor ist bevorzugt als Laserscanner ausgebildet und weist eine bewegliche Ablenkeinheit auf, mit deren Hilfe die ausgesandten Lichtstrahlen periodisch durch den Überwachungsbereich geführt werden und so mehrere Abtastebenen bilden, wobei insbesondere die Ablenkeinheit in Form einer drehbaren Abtasteinheit ausgebildet ist, in welcher der Lichtsender und/oder der Lichtempfänger untergebracht ist. Die ausgesandten Lichtstrahlen verlaufen vorzugsweise nicht parallel zueinander, sondern bilden ein Strahlenbündel mit einem gegenseitigen Winkelabstand. Dann entstehen genaugenommen keine Abtastebenen, sondern Mantelflächen eines Kegels oder Ausschnitte davon, anschaulich gesprochen eine Schachtelung von Sanduhren. Das wird hier vereinfachend dennoch als Abtastebene bezeichnet. Die Ablenkeinheit ist vorzugsweise in Form einer drehbaren Abtasteinheit ausgebildet, die praktisch einen beweglichen Messkopf bildet, in dem zumindest der Lichtsender und möglicherweise auch Lichtempfänger und die Auswertungseinheit oder Teile davon untergebracht sind.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners mit einem optischen Konzentratorelement;
- Fig. 2: eine vergrößerte Ansicht des optischen Konzentratorelements;
- Fig. 3: eine Ansicht einer weiteren Ausführungsform eines optischen Konzentratorelements mit acht statt vier Lichtleitern;
- Fig. 4: eine Ansicht einer weiteren Ausführungsform eines optischen Konzentratorelements mit sich verjüngenden Lichtleitern;
- Fig. 5: eine Ansicht einer weiteren Ausführungsform eines optischen Konzentratorelements mit angeschrägten Lichteintrittsflächen;
- Fig. 6: eine Ansicht einer weiteren Ausführungsform eines optischen Konzentratorelements mit Lichtleitern, die in ihrem Eintrittsbereich in Verlängerung des einfallenden Lichtstrahls orientiert sind;
- Fig. 7: eine Ansicht einer weiteren Ausführungsform eines optischen Konzentratorelements mit stabilisierendem Verbindungssteg an den Lichtleiterenden;
- Fig. 8: eine Ansicht einer weiteren Ausführungsform eines optischen Konzentratorelements mit unterschiedliche langen Lichtleiterenden;
- Fig. 9: eine Ansicht einer weiteren Ausführungsform eines optischen Konzentratorelements mit relativ dicht liegenden Lichteintrittsflächen und sich verjüngenden Lichtleitern;
- Fig. 10: eine Darstellung einer optimalen Krümmung über die Länge eines Lichtleiters; und
- Fig. 11: eine Ansicht einer weiteren Ausführungsform eines optischen Konzentratorelements mit einzelnen Empfangsoptiken je Lichtleiter.

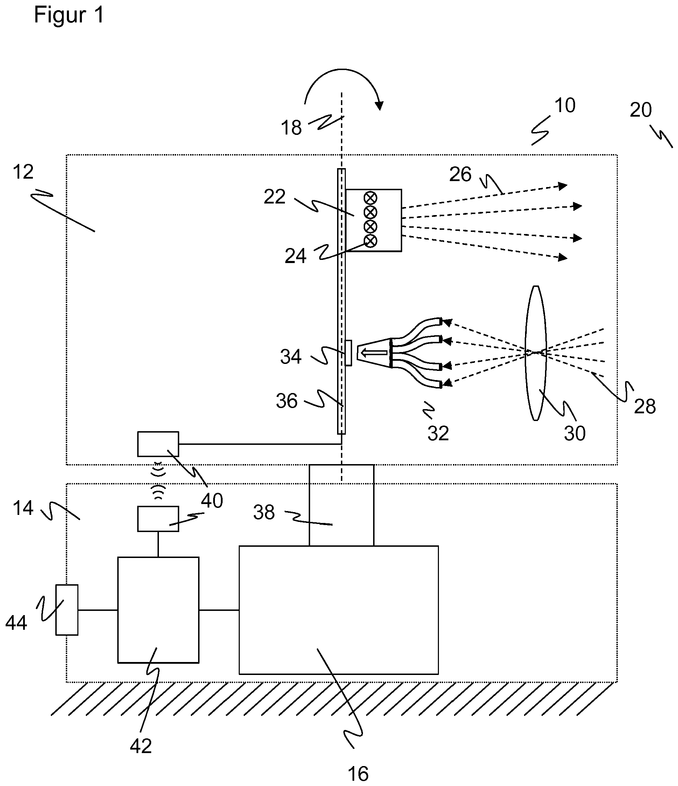

Figur 1 zeigt eine schematische Schnittdarstellung durch einen optoelektronischen Sensor 10 in einer Ausführungsform als Laserscanner. Der Sensor 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

In der Abtasteinheit 12 erzeugen ein Lichtsendemodul 22, das in diesem Beispiel vier einzelne Lichtquellen 24 aufweist, mehrere separierte Sendelichtstrahlen 26 mit gegenseitigem Winkelversatz, die in den Überwachungsbereich 20 ausgesandt werden. Die Lichtquellen 24 sind beispielsweise LEDs oder Laser in Form von Kantenemittern oder VCSELs. Die Anzahl der Lichtquellen 24 und Sendelichtstrahlen 26 muss anders als dargestellt nicht übereinstimmen, da eine Sendeoptik Sendelichtstrahlen 26 kombinieren oder aufteilen kann. Einige nicht abschließende Beispiele einer möglichen Ausgestaltung des Lichtsendemoduls 22 sind in der einleitend genannten DE 10 2015 121 839 A1 erläutert.

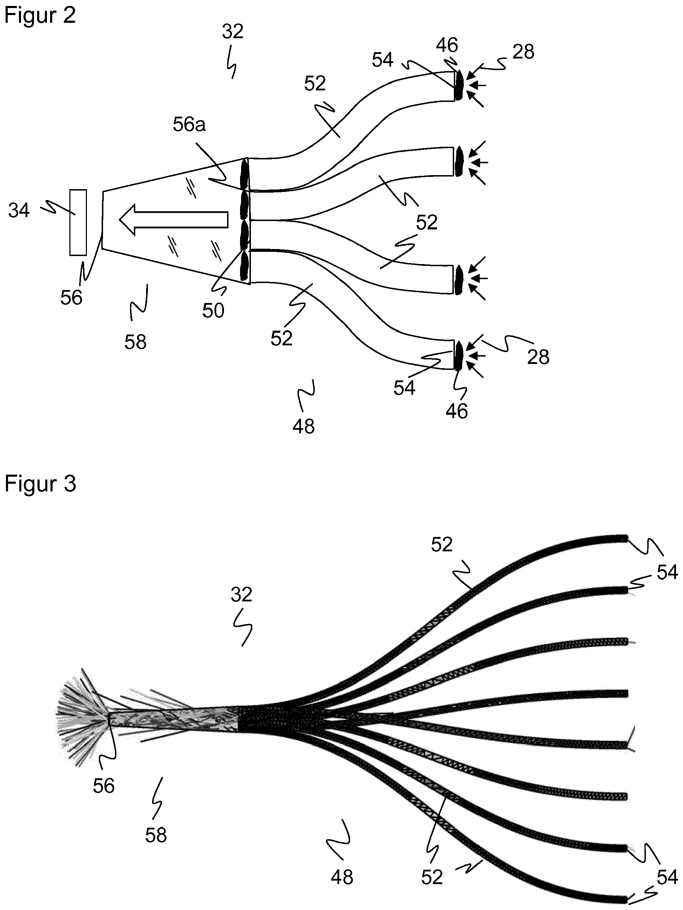

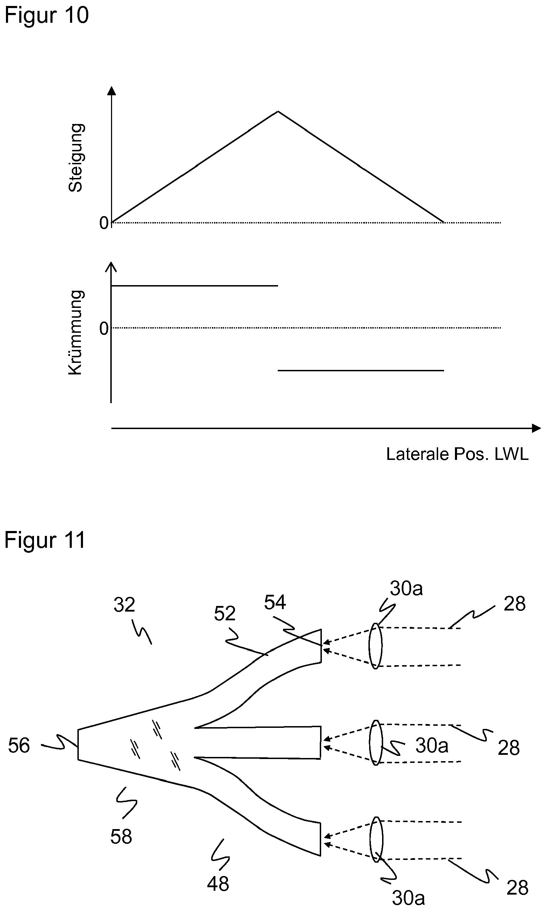

Treffen die Sendelichtstrahlen 26 in dem Überwachungsbereich 20 auf ein Objekt, so kehren entsprechende remittierte Lichtstrahlen 28 zu dem Sensor 10 zurück. Die remittierten Lichtstrahlen 28 werden von einer gemeinsamen Empfangsoptik 30 auf ein optisches Konzentratorelement 32 und weiter auf einen Lichtempfänger 34 geführt. Das optische Konzentratorelement 32 wird später unter Bezugnahme auf die Figuren 2 bis 10 genauer erläutert. In einer Ausführungsform gemäß Figur 11 werden ferner anstelle einer gemeinsamen Empfangsoptik 30 mehrere Empfangsoptiken je remittiertem Lichtstrahl 28 eingesetzt.

Der Lichtempfänger 34 ist ein gemeinsamer Lichtempfänger. Beispielsweise handelt es sich um eine Photodiode oder APD (Avalanche Photodiode). Möglich ist auch, dass der Lichtempfänger 34 mehrere Lichtempfangselemente aufweist, aber ein gemeinsames, beispielsweise aufsummiertes Empfangssignal erzeugt. Anders als bei einem sonst üblichen pixelaufgelösten Lichtempfänger gibt es also keine Ortsauflösung. Mehrere Lichtempfangselemente, die gemeinsam nur einen Lichtempfänger bilden, sind insbesondere zum Erhöhen der Ereignisstatistik in einem SPAD-Empfänger (Single-Photon Avalanche Diode) sinnvoll

Lichtsendemodul 22 und Lichtempfänger 34 sind auf einer Leiterkarte 36 angeordnet, die auf der Drehachse 18 liegt und mit der Welle 38 des Antriebs 16 rotiert. Eine berührungslose Versorgungs- und Datenschnittstelle 40 verbindet die bewegliche Abtasteinheit 12 mit der ruhenden Sockeleinheit 14. Dort befindet sich eine Steuer- und Auswertungseinheit 42, welche das Lichtsendemodul 22 steuert und das Empfangssignal des Lichtempfängers 34 zur weiteren Auswertung erhält. Sie steuert außerdem den Antrieb 16 und erhält das Signal einer nicht gezeigten, von Laserscannern allgemein bekannten Winkelmesseinheit, welche die jeweilige Winkelstellung der Abtasteinheit 12 bestimmt.

Zur Auswertung wird vorzugsweise mit einem an sich bekannten Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen Sendelichtstrahls 26 beziehungsweise remittierten Lichtstrahls 28 auf dem Lichtempfänger 34 ebenfalls bekannt, so dass insgesamt ein dreidimensionaler Raumbereich abgetastet wird.

Da nur ein gemeinsamer Lichtempfänger 34 verwendet wird, kann die Identität der remittierten Lichtstrahlen 28, damit der Abtastebene oder Winkelrichtung in Elevation, nicht wie herkömmlich durch den Ort des Lichteinfalls oder die Identität des jeweils betroffenen Lichtempfängers festgestellt werden. Deshalb werden in einer vorteilhaften Ausführungsform die einzelnen Lichtquellen 24 in einem Zeitmultiplexverfahren betrieben. Dann ist immer nur jeweils ein Sendelichtstrahl 26 und folglich ein remittierter Lichtstrahl 28 vorhanden, dessen Identität folglich am Lichtempfänger 34 beziehungsweise in der nachgeordneten Auswertung bekannt ist. Alternativ können den Sendelichtstrahlen 26 unterschiedliche Codierungen aufgeprägt werden, beispielsweise Pulsfolgen, die dann von der Steuer- und Auswertungseinheit 42 genutzt werden, um den remittierten Lichtstrahl zu identifizieren.

Somit sind die Objektpositionen beziehungsweise Objektkonturen bekannt und können über eine Sensorschnittstelle 44 ausgegeben werden. Die Sensorschnittstelle 44 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 44 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 12. Alternativ ist auch eine periodische Ablenkung mittels Drehspiegel denkbar. Bei mehreren Sendelichtstrahlen 26 hat das aber den Nachteil, dass es von der jeweiligen Drehstellung abhängt, wie die mehreren Sendelichtstrahlen 26 in den Überwachungsbereich 20 fallen, denn deren Anordnung rotiert durch den Drehspiegel, wie bekannte geometrische Überlegungen ergeben. Eine weitere alternative Ausführungsform schwenkt die Abtasteinheit 12 hin und her, entweder anstelle der Drehbewegung oder zusätzlich um eine zweite Achse senkrecht zur Drehbewegung, um auch in Elevation eine Abtastbewegung zu erzeugen.

Der in Figur 1 gezeigte Aufbau eines Laserscanners ist rein beispielhaft zu verstehen. So wäre alternativ jede andere an sich beispielsweise von eindimensionalen optoelektronischen Sensoren oder Laserscannern bekannte optische Anordnung wie etwa die Verwendung eines Umlenk- oder Strahlteilerspiegels möglich. Anstelle der auf der Drehachse liegenden Leiterkarte 36 ist auch eine horizontale Leiterkarte und grundsätzliche jede Ein- und Mehrfachanordnung von Leiterkarten denkbar. Die Steuer- und Auswertungsfunktionalität kann im Übrigen praktisch beliebig auf die Abtasteinheit 12, die Sockeleinheit 14 und gegebenenfalls auch externe Komponenten verteilt werden.

Auch die Ausführung als Laserscanner ist beispielhaft. Es ist auch ein eindimensionaler Taster ohne periodische Bewegung möglich, der dann praktisch nur aus der ruhenden Abtasteinheit 12 mit entsprechender Elektronik, jedoch ohne Sockeleinheit 14 besteht.

Figur 2 zeigt das Konzentratorelement 32 nochmals in einer vergrößerten Ansicht. Die gemeinsame Empfangsoptik 30 fokussiert die remittierten Lichtstrahlen 28 auf jeweils voneinander räumlich getrennte Empfangslichtflecke 46. Das Konzentratorelement 32 liegt folglich bevorzugt mit seinem Eingangsbereich in der Brennebene der gemeinsamen Empfangsoptik 30. Die Empfangslichtflecke 46 sind entsprechend den separierten Sendelichtstrahlen 26 voneinander getrennt, es liegt demnach jeweils ein Abstand dazwischen, der einem Bruchteil, beispielsweise mindestens einem Viertel oder der Hälfte des Durchmessers eines Empfangslichtflecks 46 entspricht. Vorzugsweise liegen die Empfangslichtflecke 46 sogar wie dargestellt weiter voneinander entfernt als ein Durchmesser. Außerdem bilden die Empfangslichtflecke 46 vorzugsweise wie gezeigt eine Reihe. Eine zweidimensionale Anordnung mit gegenseitigem Versatz senkrecht zur Papierebene der Figur 2 bleibt aber denkbar.

Das Konzentratorelement 32 weist einen ersten Konzentratorabschnitt 48 auf, der die Empfangslichtflecke 46 gleichsam aufsammelt und zu einem Zwischenlichtfleck 50 bündelt. Dazu ist jeweils ein Lichtleiter 52 pro Empfangslichtfleck 46 vorgesehen, der bei dem Empfangslichtfleck 46 eine Lichteintrittsfläche 54 aufweist. Die Lichteintrittsfläche 54 ist groß genug für den Empfangslichtfleck 46. Sie kann absichtlich kleiner gewählt werden als die lichtempfindliche Fläche des Lichtempfängers 34, was dann zu einer Blendenwirkung je remittiertem Lichtstrahl 28 und somit einer verbesserten Fremdlichtfestigkeit führt. Die Lichtleiter 52 sind zum Zentrum hin gebogen, füllen also gemeinsam in Richtung zum Lichtempfänger 34 einen kleineren Querschnitt aus. In dem Zwischenlichtfleck 50 sind daher die Abstände der Empfangslichtflecke 46 teilweise oder sogar nahezu vollständig eliminiert. Vorteilhafte Krümmungseigenschaften der Lichtleiter 52 werden später, insbesondere unter Bezugnahme auf die Figur 10, noch diskutiert.

Die Austrittsbereiche der Lichtleiter 52 bei dem Zwischenlichtfleck 50 können gemeinsam bereits eine Lichtaustrittsfläche 56a des Konzentratorelements 32 bilden, sofern die Gesamtfläche mit ausreichendem Anteil auf den Lichtempfänger 34 passt.

Ansonsten folgt vorzugsweise lückenlos ein optionaler zweiter Konzentratorabschnitt 58, und erst dessen Austrittsbereich bildet die Lichtaustrittfläche 56. Der zweite Konzentratorabschnitt 58 ist sich verjüngend ausgeführt, so dass die Lichtaustrittsfläche 56 kleiner ist als der Eingangsbereich bei dem Zwischenlichtfleck 50. Dadurch wird die Querschnittsfläche des Zwischenlichtflecks 50 reduziert, damit möglichst viel Licht auf dem Lichtempfänger 34 ankommt.

Für die Geometrie des zweiten Konzentratorabschnitts 58 sind auch die einleitend genannten Trichter oder parabolischen Konzentratoren geeignet. Innerhalb des Konzentratorelements 32 spielt eine geringere Lichteffizienz durch aus dem zweiten Konzentratorabschnitt 32 reflektiertes Licht praktisch keine Rolle, da die Strahlführung vorgegeben und der Übergang lückenlos ist. Die Verjüngung kann zusätzlich oder alternativ in der nicht dargestellten Querausdehnung senkrecht zur Papierebene der Figur 2 erfolgen. Der zweite Konzentratorabschnitt 58 kann neben seiner Wirkung der Flächenreduktion auch noch die remittierten Lichtstrahlen 28 vermischen und so das Empfangslicht weitgehend unabhängig vom konkreten remittierten Lichtstrahl 28 über den gesamten Lichtempfänger 34 zumindest einigermaßen gleichmäßig verteilen.

Figur 3 zeigt eine weitere Ausführungsform des optischen Konzentratorelements 32. In diesem Fall sind acht statt vier Lichtleiter 52 für eine entsprechende Anzahl von remittierten Lichtstrahlen 28 vorgesehen. Außerdem sind simulierte Strahlverläufe in dem Konzentratorelement 32 dargestellt, aus denen unter anderem die Vermischung in dem zweiten Konzentratorabschnitt 58 zu erkennen sind.

Als Zahlenbeispiel sind in der Simulation Lichteintrittsflächen 54 mit einer Fläche von je 0,5x0,5 mm angenommen. Die acht Lichtleiter 52 mit einer Länge von hier 30 mm münden bei einem Zwischenlichtfleck mit einer Fläche von 1,0 x 2,0 mm, sie sind in zwei leicht höhenversetzten Lagen mit je vier Lichtleitern ausgeführt. Der zweite Konzentratorabschnitt 58 mit einer Länge von 10 mm reduziert die Querschnittsfläche weiter auf 1,0 x 1,0 mm, und das ist eine realistische Flächengröße für einen als SPAD-Detektor ausgebildeten Lichtempfänger 34. Mit anderen Zahlenwerten kann auch eine kleinere Fläche beispielsweise einer Photodiode oder APD erreicht werden.

Bereits mit einem Vollvolumen aus PMMA-Kunststoff lässt sich so ein Gesamtwirkungsgrad von 70% erzielen. Durch ergänzende Maßnahmen wie die Vermeidung von Kreuzungspunkten der Lichtleiter 52 und eine Entspiegelung an den Ein- und Austrittsfacetten der Lichtleiter 52 ist eine Erhöhung auf 85% einfach möglich. Bei geringeren Anforderungen, beispielsweise nur drei Armen mit Lichteintrittsflächen von weiterhin 0,5 x 0,5 mm und einer Fläche des Lichtempfängers von 0,8 x 0,8 mm ist auf einer Baulänge von 10mm +5 mm ein Wirkungsgrad von 88% erreichbar. Da ein Fresnel-Reflexionsverlust von 2 x 4% unvermeidlich ist, liegt dieser Wert schon sehr nahe am optimalen Wirkungsgrad von 92%.

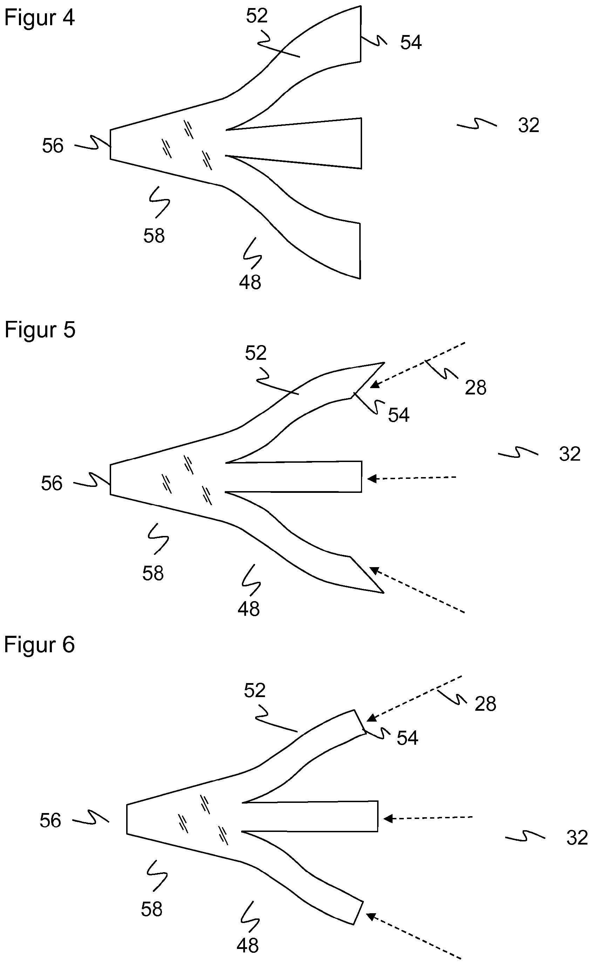

Figur 4 zeigt eine Ausführungsform des optischen Konzentratorelements 32, in der sich bereits die Lichtleiter 52 in dem ersten Konzentratorabschnitt 48 verjüngen. In diesem und den weiteren Beispielen sind der Einfachheit halber nur noch je drei Lichtleiter 52 gezeigt. Diese Anzahl ist weiterhin beispielhaft, der Sensor 10 kann eine beliebige Anzahl von Lichtstrahlen 26, 28 aufweisen.

Durch die sich verjüngenden Lichtleiter 52 wird bereits im ersten Konzentratorabschnitt 48 dafür gesorgt, dass die Empfangslichtflecke 46 nicht nur näher zusammenrücken, sondern auch für sich schon kleiner werden. Der zweite Konzentratorabschnitt 58 ergänzt diesen Effekt, oder es wird auf den zweiten Konzentratorabschnitt 58 verzichtet.

Figur 5 zeigt eine Ausführungsform des optischen Konzentratorelements 32 mit je nach Lage des Lichtleiters 52 unterschiedlich angeschrägten Lichteintrittsflächen 54. Dadurch wird eine optimale Einkopplung von aus verschiedenen Winkeln einlaufenden remittierten Lichtstrahlen 28 erreicht. Die angeschrägten Lichteintrittsflächen 54 brechen den Hauptstrahl des jeweiligen remittierten Lichtstrahls 28, so dass er danach parallel zum Eintrittsbereich des Lichtleiters 52 verläuft.

Figur 6 zeigt eine alternative Ausführungsform. Hier besitzen die Lichtleiter 52 senkrechte Lichteintrittsflächen 54, sind dafür aber selbst unterschiedlich gerade so gebogen, dass der Eintrittsbereich mit der jeweiligen Richtung der einfallenden remittierten Lichtstrahlen 28 übereinstimmt. Auch das ermöglicht eine optimale Einkopplung nun mittig im Winkelraum.

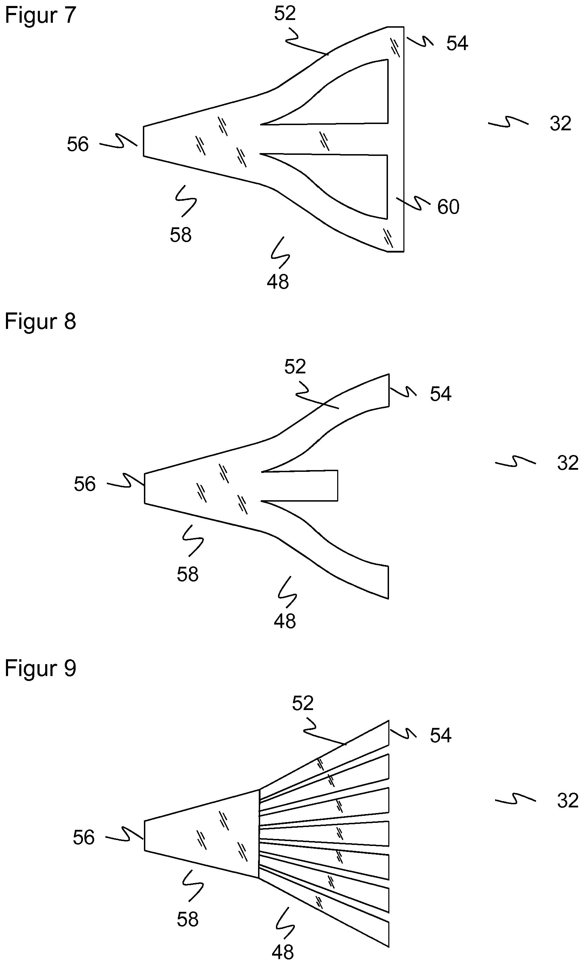

Figur 7 zeigt eine Ausführungsform des optischen Konzentratorelements 32, das nun einen zusätzlichen Steg 60 über alle Lichteintrittsflächen 54 umfasst. Optisch hat dieser Steg 60 praktisch keinen Einfluss, sorgt aber für eine verbesserte mechanische Stabilität und eine Fixierung der Lichtleiter 52 in ihrer gewünschten Anordnung.

Figur 8 zeigt eine Ausführungsform des optischen Konzentratorelements 32, bei dem die Lichteintrittsflächen 54 nicht auf einer geraden Linie liegen. Die Lichtleiter sind also in X-Richtung der Figur 8 unterschiedlich lang. Eine transversale Kurve der Lichteintrittsflächen 54, beispielsweise eine Kreisbahn, oder auch eine zweidimensionale Anordnung mit einer gekrümmten Fläche bildet einen weiteren Designfreiheitsgrad, mit dem beispielsweise eine Bildfeldkrümmung der gemeinsamen Empfangsoptik 30 ausgeglichen werden kann.

Figur 9 zeigt eine Ausführungsform des optischen Konzentratorelements 32, die zunächst derjenigen nach Figur 3 ähnelt, weil bereits die Lichtleiter 52 sich verjüngen. Außerdem handelt es sich in diesem Fall um gerade Lichtleiter 52, deren Lichteintrittsflächen 54 nur wenig voneinander separiert sind, prinzipiell nahezu lückenlos nebeneinander sitzen können. Mit einem solchen Konzentratorelement 32 lässt sich ein beweglicher Empfangslichtfleck mit einem stehenden Lichtempfänger 34 erfassen, etwa bei einem beweglichen, scannenden Sendelichtstrahl 26 mittels optical phased array oder anderen Maßnahmen. Der zweite Konzentratorabschnitt 58 sorgt dafür, dass die Lichtleiter 52 nicht zu stark verjüngend beziehungsweise zu lang ausgebildet sein müssen und dennoch eine ausreichende Querschnittsreduktion erreicht wird.

Figur 10 illustriert einen vorteilhaften Krümmungsverlauf in den Lichtleitern 52. Dabei ist im oberen Teil die Steigung, im unteren Teil die Krümmung als deren Ableitung jeweils in Abhängigkeit von der lateralen X-Position auf einem Lichtleiter 52 gezeigt. Der Lichtleiter 52 sollte im Eintrittsbereich bei der Lichteintrittsfläche 54 parallel zum gegebenenfalls bei Eintritt in den Lichtleiter 52 noch gebrochenen Hauptstrahl des remittierten Lichtstrahls 28 stehen. Im Austrittsbereich, d.h. an der Lichtaustrittsfläche 56a beziehungsweise im Übergang zu dem zweiten Konzentratorabschnitt 58, sollte der Lichtleiter 52 parallel zu den anderen Lichtleitern 52 und damit senkrecht zum Lichtempfänger 34 stehen.

Verlaufen nämlich die Lichtleiter 52 im Austrittsbereich nicht zumindest einigermaßen parallel zueinander, dann treffen sie mit einem nicht mehr nur vernachlässigbar von der Senkrechten abweichenden Winkel auf die Lichtaustrittsfläche 56. Zumindest ein Teil der Lichtbündel wird dann stärker geneigt sein als der Grenzwinkel der Totalreflexion. Diese Lichtanteile können dann im Endeffekt das Konzentratorelement 32 an anderer Stelle verlassen, mit der Folge eines reduzierten Gesamtwirkungsgrades.

Um deshalb den gewünschten Verlauf der Lichtleiter 52 am Eintrittsbereich und Austrittsbereich zu erzielen, muss ein gegenseitiger Seitenversatz der Lichtleiter 52 zum Zentrum hin durch Biegen der Lichtleiter 52 überwunden werden. Eine zu starke Krümmung würde aber die Winkelverteilung des geleiteten Lichts unvorteilhaft verändern. Daher sollte der Maximalwert der Krümmung möglichst klein sein. Dazu ist der notwendige Seitenversatz der Lichtleiter 52 auf eine durch den verfügbaren Bauraum begrenzte Länge der Lichtleiter 52 zu verteilen. Die optimale Lösung dafür ist in Figur 10 gezeigt: Die Krümmung bleibt konstant, wechselt aber in der Mitte an einem Wendepunkt das Vorzeichen. Jede andere Verteilung hätte bei gleichem integriertem Seitenversatz über die Länge des Lichtleiters 52 mindestens einen Punkt mit größerer Krümmung.

Figur 11 zeigt nochmals eine Ausführungsform des Konzentratorelements 32. Hier sind einzelne Empfangsoptiken 30a vor jeder Lichteintrittsfläche 54 vorgesehen, welche die gemeinsame Empfangsoptik 30 ersetzen oder ergänzen. Denkbar wäre auch eine Mischform zwischen nur einer gemeinsamen Empfangsoptik 30 und individuellen Empfangsoptiken 30a, beispielsweise mit mehreren Empfangslinsen für jeweils eine Gruppe von Lichteintrittsflächen 54. Anstelle des dargestellten Konzentratorelements 32 könnte alternativ jede andere vorgestellte Ausführungsform zum Einsatz kommen.

Das in verschiedenen Ausführungsformen erläuterte optische Konzentratorelement 32 kann aus Glas oder Kunststoff und beispielsweise durch Spritzguss, Gießen oder Prägen hergestellt sein. Dabei sind ein Vollvolumen, ein Vollvolumen mit äußerer Verspiegelung oder ein Hohlkörper mit innerer Verspiegelung möglich. Die Lichtleiter 52 können biegsam sein, etwa in Form dünner Glasfasern oder elastischen Silikons. Dann lassen sich die nun beweglichen Lichteintrittsflächen 54 für eine Justierung nutzen. Lichtleiter 52 können auch einen elaborierteren Querschnittsaufbau aufweisen, also ein Kernmaterial mit hohem Brechungsindex für die Totalreflexion und ein Mantelmaterial mit kleinerem Brechungsindex, oder sogar einen mehrfach gestuften oder kontinuierlichen radialen Brechungsindex-Gradienten. Der aufwändigeren Herstellung steht dann der Vorteil gegenüber, dass die äußere Oberfläche weniger empfindlich gegen Verschmutzung und Kratzer ist, denn die wirksame Totalreflexionsfläche wird ins Innere verschoben. Die Lichtleiter 52 sind vorzugsweise rund, aber andere Querschnittsformen oder eine Veränderung der Querschnittsform über die Länge der Lichtleiter 52 ist denkbar.

In den dargestellten Ausführungsformen liegen die Lichtleiter 52 jeweils in einer Ebene. Davon kann aber auch abgewichen werden. Zum einen ist nicht ausgeschlossen, dass die Lichteintrittsflächen 54 ein zweidimensionales Muster bilden und nicht auf einer geraden oder gekrümmten Linie liegen. Selbst wenn die Lichteintrittsflächen 54 noch in einer Ebene bleiben, kann es vorteilhaft sein, die Lichtleiter 52 in beiden transversalen Raumrichtungen zu verbiegen, also auch zusätzlich senkrecht zu der Papierebene der Darstellungen. Das schafft gerade im Falle einer größeren Anzahl von mehr als nur drei oder vier Lichtleitern 52 Raum dafür, die Austrittsbereiche in einem zwei- statt nur eindimensionalen Raster auf einen möglichst kompakten Zwischenlichtfleck 50 zu führen und so die beiden Dimensionen der Fläche des Lichtempfängers 34 besser auszunutzen.

## Patentansprüche

1. Optoelektronischer Sensor (10) zur Erfassung eines Überwachungsbereichs (20), der mindestens einen Lichtsender (22) zum Aussenden mehrerer voneinander separierter ausgesandter Lichtstrahlen (26), einen gemeinsamen Lichtempfänger (34) zum Erzeugen eines Empfangssignals aus an Objekten in dem Überwachungsbereich (20) remittierten Lichtstrahlen (28) und eine Auswertungseinheit (42) aufweist, die dafür ausgebildet ist, aus dem Empfangssignal Informationen über die Objekte an dem jeweiligen Auftreffort eines ausgesandten Lichtstrahls (26) zu gewinnen,
**dadurch gekennzeichnet,**
**dass** dem Lichtempfänger (34) ein optisches Konzentratorelement (32) vorgeordnet ist, welches mehrere voneinander separierte Lichteintrittsflächen (54) für jeweils einen remittierten Lichtstrahl (28) sowie eine gemeinsame Lichtaustrittsfläche (56, 56a) aufweist.

2. Sensor (10) nach Anspruch 1,
wobei dem Konzentratorelement (32) eine gemeinsame Empfangsoptik (30) vorgeordnet ist, wobei insbesondere in deren Brennebene die Lichteintrittsflächen (54) angeordnet sind.

3. Sensor (10) nach Anspruch 1 oder 2,
wobei das Konzentratorelement (32) mehrere Lichtleiter (52), insbesondere jeweils einen Lichtleiter (52) je remittiertem Lichtstrahl (28), zwischen einer jeweiligen Lichteintrittsfläche (54) und der Lichtaustrittsfläche (56) aufweist.

4. Sensor (10) nach Anspruch 3,
wobei mindestens ein Lichtleiter (52) einen sich in Richtung von der Lichteintrittsfläche (54) zu der Lichtaustrittsfläche (56a) verjüngenden Querschnitt aufweist.

5. Sensor (10) nach einem der vorhergehenden Ansprüche,
wobei mindestens eine Lichteintrittsfläche (54) gegenüber der Senkrechten zu dem dort einfallenden remittierten Lichtstrahl (28) verkippt ist.

6. Sensor (10) nach einem der Ansprüche 3 bis 5,
wobei mindestens ein Lichtleiter (52) in einem Eintrittsbereich an der Lichteintrittsfläche (54) entsprechend dem Lichtweg des dort einfallenden remittierten Lichtstrahls (28) orientiert ist und/oder wobei mindestens einige Lichtleiter (52) in einem Austrittsbereich an der Lichtaustrittsfläche (56a) parallel zueinander angeordnet sind.

7. Sensor (10) nach einem der Ansprüche 3 bis 6,
wobei mindestens ein Lichtleiter (52) gebogen ist, insbesondere in einem mit der Lichteintrittsfläche (54) beginnenden ersten Bereich mit konstanter Krümmung zur Mitte des Konzentratorelements (32, 48) hin und in einem mit der Lichtaustrittsfläche (56a) endenden zweiten Bereich mit konstanter Krümmung von der Mitte weg.

8. Sensor (10) nach einem der Ansprüche 3 bis 7,
wobei mindestens ein Lichtleiter (52) im Inneren einen höheren Brechungsindex aufweist.

9. Sensor (10) nach einem der vorhergehenden Ansprüche,
wobei die Lichteintrittsflächen (54) untereinander einen Abstand aufweisen, der mindestens einem Viertel, einer Hälfte oder einem ganzen Durchmesser einer Lichteintrittsfläche (54) entspricht.

10. Sensor (10) nach einem der vorhergehenden Ansprüche,
wobei das Konzentratorelement (32) einen nicht-abbildenden zweiten Konzentratorabschnitt (58) aufweist, insbesondere einen Trichter oder einen parabolischen Konzentrator, der einen sich an die Lichtleiter (52) anschließenden Eintrittsbereich und die Lichtaustrittsfläche (56) aufweist und sich von dem Eintrittsbereich zu der Lichtaustrittsfläche (56) verjüngt.

11. Sensor (10) nach einem der vorhergehenden Ansprüche,
wobei das Konzentratorelement (32) dafür ausgebildet ist, die Empfangslichtflecken (46) der remittierten Lichtstrahlen (28) auf dem Lichtempfänger (34) übereinander anzuordnen.

12. Sensor (10) nach einem der vorhergehenden Ansprüche,
wobei der Flächeninhalt der lichtempfindlichen Fläche des Lichtempfängers (34) kleiner ist als die Summe der Flächeninhalte der Lichteintrittsflächen (54) und/oder wobei der Flächeninhalt einer Lichteintrittsfläche (54) kleiner ist als derjenige der lichtempfindlichen Fläche des Lichtempfängers (34).

13. Sensor (10) nach einem der vorhergehenden Ansprüche,
wobei die Auswertungseinheit (42) dafür ausgebildet ist, mehrere Lichtsender (24) zum Aussenden der mehreren voneinander separiert ausgesandten Lichtstrahlen (26) in einem Multiplexverfahren nacheinander zu aktivieren.

14. Sensor (10) nach einem der vorhergehenden Ansprüche,
wobei die Auswertungseinheit (42) dafür ausgebildet ist, aus einer Lichtlaufzeit zwischen Aussenden der ausgesandten Lichtstrahlen (26) und Empfangen der remittierten Lichtstrahlen (28) einen Abstand des Objekts zu bestimmen und/oder der als Laserscanner ausgebildet ist und eine bewegliche Ablenkeinheit (12) aufweist, mit deren Hilfe die ausgesandten Lichtstrahlen (26) periodisch durch den Überwachungsbereich (20) geführt werden und so mehrere Abtastebenen bilden, wobei insbesondere die Ablenkeinheit (12) in Form einer drehbaren Abtasteinheit (12) ausgebildet ist, in welcher der Lichtsender (22) und/oder der Lichtempfänger (34) untergebracht ist.

15. Verfahren zur Erfassung eines Überwachungsbereichs (20), bei dem mehrere voneinander separierte Lichtstrahlen (26) in den Überwachungsbereich (20) ausgesandt, aus den von Objekten in dem Überwachungsbereich (20) remittierten Lichtstrahlen (28) in einem gemeinsamen Lichtempfänger (34) ein Empfangssignal erzeugt und das Empfangssignal ausgewertet wird, um Informationen über die Objekte an dem jeweiligen Auftreffort eines ausgesandten Lichtstrahls (26) zu gewinnen,
**dadurch gekennzeichnet,**
**dass** von einem optischen Konzentratorelement (32) vor dem Lichtempfänger (34) die remittierten Lichtstrahlen (28) an mehreren voneinander separierten Lichteintrittsflächen (54) für jeweils einen remittierten Lichtstrahl (28) aufgefangen und in dem optischen Konzentratorelement (32) auf eine gemeinsame Lichtaustrittsfläche (56a, 56) zusammengeführt werden.
